# EUROPEAN PATENT APPLICATION

(11) **EP 3 974 304 A1**
(43) Date of publication of application: **30.03.2022**
(21) Application number: 20198833.4
(22) Date of filing: 28.09.2020
(51) Int. Cl.: B62K 11/00, B62J 45/413, H02P 21/22

(54) **SWING CAR CONTROLLER**

(71) Applicant: Changzhou Taochen Electronic Technology Co., Ltd, Changzhou, Jiangsu (CN)
(72) Inventor: Bu, Tao, Changzhou, 17 (CN)
(74) Representative: Cabinet Chaillot

(57) **Abstract**

The invention discloses a swing car controller, comprising left and right motor control boards (1, 2), the left is arranged close to the left motor (3), and the same for the right (6); the left connects the left motor (3) and a left car body attitude sensor (4); the left car body attitude sensor (4) collects the left pedal attitude information and sends to the left motor control board (1), which controls the left motor (3) for normal operation through a left motor vector drive circuit (5). The motor control board is divided into left and right parts; the left collects the left pedal information and controls the left motor (3) to operate normally, and the same for the right; the distances between the motor phase wires and HALL wires on both sides to the left and right control boards (1, 2) are the shortest, which reduces line impedance and line interference, improves vehicle control performance, and makes vehicle operation more stable.

## Description

### BACKGROUND OF THE INVENTION

### 1. Field of the Invention

The invention relates to the field of controllers, in particular to a swing car controller.

### 2. Description of the Related Art

The traditional swing car is a single-system control board that controls the left and right motors at the same time by a drive motherboard. Two attitude boards are installed on the left and right pedals respectively to detect the pedal information on the left and right sides. The left and right attitude boards communicate with the drive motherboard respectively. As a result, there must be three control boards, and such a controller has the following disadvantages:
1. when assembling the whole vehicle and assembling the circuit board, the motor phase wires and HALL wires on the left and right sides need to be led to a drive motherboard; so there must be a long line on one side, which will affect the riding performance of the whole vehicle;
2. due to the large difference in the length of the phase wires and HALL wires of the motors on both sides, the HALL wires of the motor on one side are obviously longer than those on the other side; to a certain extent, the HALL on the long side of the HALL trace has poor anti-interference ability; the resistance of the motor on the long side of the wire is also affected by the length of the wire, which will also seriously affect the control performance of the controller;
3. in addition, the car body attitude sensor on the left and right attitude boards of the single system must first communicate with the attitude board microcontroller when calculating the pedal attitude, and the attitude board microcontroller communicates with the main motherboard; as a result, the car body attitude sensor cannot directly communicate with the corresponding main drive MCU, which will inevitably affect the performance of the entire vehicle;
4. the traditional single system board is that the left and right motor drive circuits are integrated on a drive board, so the probability of failure of the board is relatively high, which will bring great pressure to the board for repair;
5. in the future, the swing car will develop in the direction of better performance, smaller size, lighter weight, and more convenient carrying; the traditional single-system control board cannot do this;
6. the traditional controller cannot design the LED power to be very large, which greatly limits the upgrade of peripheral LED functions;
7. the traditional swing car controller has no charging protection function, and the battery may catch fire and explode if the charger and power management board fail.

### SUMMARY OF THE INVENTION

To this end, the invention provides a swing car controller to solve the problems above in the prior art.

In order to achieve the above objectives, the invention provides the following technical solutions: a swing car controller, comprising a left motor control board and a right motor control board, wherein the left motor control board is arranged close to the left motor, and the right motor control board is arranged close to the right motor;
the left motor control board connects the left motor and a left car body attitude sensor; the left car body attitude sensor collects the left pedal attitude information and sends the information to the left motor control board; the left motor control board controls the left motor for normal operation through a left motor vector drive circuit; the left car body attitude sensor and the left motor vector drive circuit are integrated on the left motor control board;
the right motor control board connects the right motor and a right car body attitude sensor; the right car body attitude sensor collects the right pedal attitude information and sends the information to the right motor control board; the right motor control board controls the right motor for normal operation through a right motor vector drive circuit;
the left motor control board and the right motor control board both comprise a main control single-chip microcomputer, a current sampling circuit, an overcurrent protection circuit, and a charging port detection circuit; the left motor control board and the right motor control board communicate with each other through the main control single-chip microcomputer; the main control single-chip microcomputer is used for motor vector drive and control voltage and current detection;
both the left motor control board and the right motor control board are connected with a light board adapter board and a charging protection board at external, which can increase the driving power of the peripheral LED lights, and can effectively prevent the battery from overshooting when the charger and battery management board fail.

Further, the left motor control board and the right motor control board may both adopt double-sided arrangement of electronic components, and adopt chip capacitors.

Further, the drive board hardware and software of the left motor control board and the right motor control board may be the same.

Further, the light board adapter board may be connected to a light emitting diode through a light control circuit; the light emitting diode adopts a common anode connection method, and the on-off of the light emitting diode is controlled by a current-limiting resistor and an NPN triode; the light control circuit is mainly used to indicate battery power, photoelectric switch state, fault state and other state prompts.

Further, the charging protection board may comprise a linear step-down power supply circuit and a charging loop switch tube; the main control single-chip microcomputer sends instructions to control whether to charge through the detected charging current and charging voltage, so as to prevent the charger from overshooting the battery.

Further, both the left pedal and the right pedal may be provided with a photoelectric switch, and the photoelectric switch is used for pedal detection.

Further, the left motor control board may be connected to a voice prompt circuit; the sounder of the voice prompt circuit adopts a buzzer, and is driven by the NPN triode and the current-limiting resistor; the circuit is simple and reliable.

Further, the left motor control board, the left motor vector drive circuit, the right motor control board, and the right motor vector drive circuit may be all connected to a battery management circuit.

Further, the left car body attitude sensor may comprise a 3-axis gyroscope and a 3-axis acceleration sensor; both the 3-axis gyroscope and the 3-axis acceleration sensor are electrically connected to the main control single-chip microcomputer through a MPU6050 chip.

Further, the current sampling circuit may comprise a high-speed operational amplifier differential circuit and an operational amplifier circuit.

Compared with the prior art, the invention has the following advantageous effects:
1. the motor control board of the swing car of the invention is divided into left and right parts; the left motor control board collects the left pedal information and controls the left motor to operate normally, and the right motor control board collects the right pedal information and controls the right motor to operate normally; the distances between the motor phase wires and HALL wires on the left and right sides to the left and right control boards are the shortest, which reduces line impedance and line interference, improves vehicle control performance, and makes vehicle operation more stable;
2. since the car body attitude sensor and the motor drive circuit of the invention are integrated on a single control board, the car body attitude sensor directly communicates with the corresponding main control single-chip microcomputer, so it avoids the disadvantage that the traditional single-system controller main motherboard MCU cannot directly communicate with the gyroscope, which can greatly improve the control performance and reliability of the entire vehicle;
3. the hardware and software of the left and right control boards of the swing car controller of the invention are the same; when one side of the motor drive fails, only one side of the control board needs to be replaced, which can completely avoid the replacement of the entire control board due to the problem of part of the motor control circuit on one side of the traditional single-system control board, and greatly reduce the probability of single board failure;
4. the swing car controller of the invention adopts double-sided layout of electronic components, and reduces the plug-in capacitance; it is designed with chip capacitors as much as possible, which greatly reduces the volume of the control board and can make the entire vehicle volume smaller;
5. the controller of the invention is connected to a light board adapter board at external, which can increase the driving power of the peripheral LED lights;
6. the addition of a charging protection board to the swing car controller of the invention can effectively prevent the battery from overshooting when the charger and battery management board fail.

### BRIEF DESCRIPTIONOF THE INVENTION

In order to more clearly illustrate the embodiments of the invention or the technical solutions in the prior art, the drawings that need to be used in the description of the embodiments or the prior art will be briefly introduced hereinafter. Obviously, the drawings in the following description are only exemplary. For those of ordinary skill in the art, other implementation drawings may be derived from the provided drawings without creative efforts.

The structure, ratio, size, etc. shown in the specification are only used to match the content disclosed in the specification for the understanding and reading of those who are familiar with this technology, which are not used to limit the conditions under which the invention can be implemented, so they have no technical significance. Any structural modification, proportional relationship change or size adjustment without affecting the effects and objectives that the invention can produce shall still fall within the protection scope of the technical content disclosed in the invention.
FIG. 1 is a control schematic diagram of the dual system provided by the invention;
FIG. 2 is a circuit diagram of power-switching provided by the invention;
FIG. 3 is a circuit diagram of overcurrent protection provided by the invention;
FIG. 4 is a circuit diagram of voice prompt provided by the invention;
FIG. 5 is a schematic diagram of the communication connection port between the left motor control board and the right motor control board provided by the invention;
FIG. 6 is a circuit diagram of the car attitude sensor provided by the invention;
FIG. 7 is a circuit diagram of light control provided by the invention;
FIG. 8 is a circuit diagram of charging port detection provided by the invention;
FIG. 9 is a circuit diagram of the photoelectric switch provided by the invention for pedal detection.

In the figures, 1 refers to the left motor control board; 2 refers to the right motor control board; 3 refers to the left motor; 4 refers to the left car body attitude sensor; 5 refers to the left motor vector drive circuit; 6 refers to the right motor; 7 refers to the right car body attitude sensor; 8 refers to the right motor vector drive circuit; 9 refers to the main control single-chip microcomputer; 10 refers to the current sampling circuit; 11 refers to the overcurrent protection circuit; 12 refers to the charging port detection circuit; 13 refers to the battery management circuit.

### DETAILED DESCRIPTION OF THE PREFERRED EMBODIMENTS

The implementation of the invention will be illustrated hereinafter by specific embodiments. Those familiar with the technology can easily understand other advantages and effects of the invention from the contents disclosed in the specification. Obviously, the described embodiments are part of the embodiments of the invention, rather than all of the embodiments. Based on the embodiments of the invention, all other embodiments obtained by those of ordinary skill in the art without creative efforts shall all fall within the protection scope of the invention.

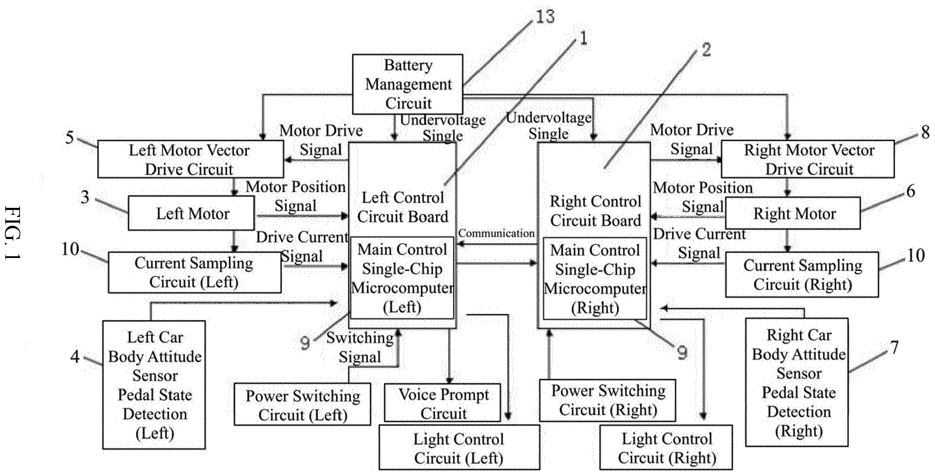

With reference to FIG. 1, a swing car controller of the embodiment, comprising a left motor control board 1 and a right motor control board 2, wherein the left motor control board 1 is arranged close to the left motor 3, and the right motor control board 2 is arranged close to the right motor 6;

the left motor control board 1 connects the left motor 3 and a left car body attitude sensor 4; the left car body attitude sensor 4 collects the left pedal attitude information and sends the information to the left motor control board 1; the left motor control board 1 controls the left motor 3 for normal operation through a left motor vector drive circuit 5; the left car body attitude sensor 4 and the left motor vector drive circuit 5 are integrated on the left motor control board 1;

the right motor control board 2 connects the right motor 6 and a right car body attitude sensor 7; the right car body attitude sensor 7 collects the right pedal attitude information and sends the information to the right motor control board 2; the right motor control board 2 controls the right motor 6 for normal operation through a right motor vector drive circuit 8;

the left motor control board 1 and the right motor control board 2 both comprise a main control single-chip microcomputer 9, a current sampling circuit 10, an overcurrent protection circuit 11, and a charging port detection circuit 12; the left motor control board 1 and the right motor control board 2 communicate with each other through the main control single-chip microcomputer 9; the main control single-chip microcomputer 9 is used for motor vector drive, control voltage and current detection, and communication with another motor control board;

both the left motor control board 1 and the right motor control board 2 are connected with a light board adapter board and a charging protection board at external, which can increase the driving power of the peripheral LED lights, and can effectively prevent the battery from overshooting when the charger and battery management board fail.

Further, the current sampling circuit 10 comprises a high-speed operational amplifier differential circuit and an operational amplifier circuit.

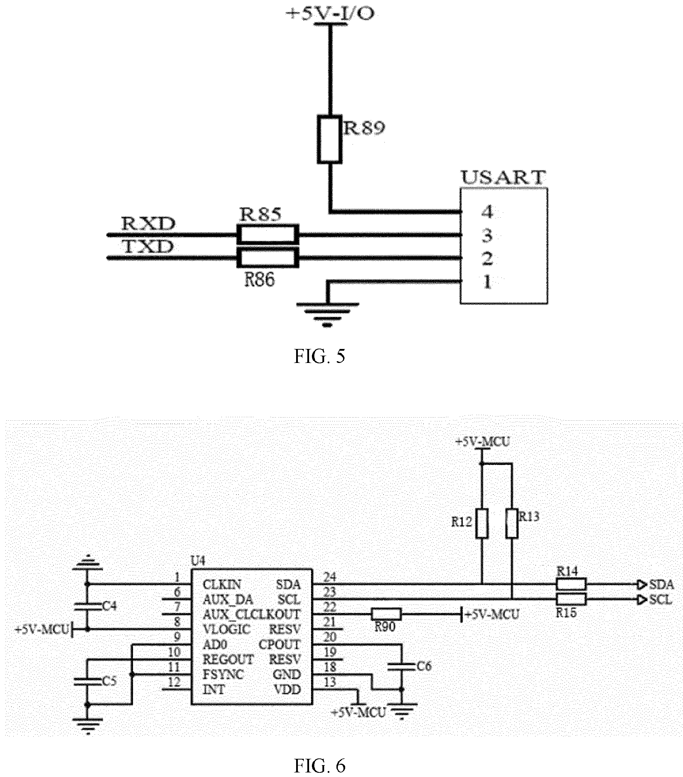

The specific implementation scenario is: the motor control board of the swing car of the invention is divided into left and right parts; the left motor control board 1 collects the left pedal information and controls the left motor 3 to operate normally, and the right motor control board 2 collects the right pedal information and controls the right motor 6 to operate normally; the distances between the motor phase wires and HALL wires on the left and right sides to the left and right control boards are the shortest, which reduces line impedance and line interference, improves vehicle control performance, and makes vehicle operation more stable;
the invention adopts two control boards to separately control the left and right motors; the connection shown in FIG. 5 is the communication connection between the left and right motors;
In the motor vector drive circuit, the motor drive adopts discrete components, which is low in cost and reliable in operation; the grid voltage of the MOS tube must be higher than the source voltage when the upper arm is turned on, and the driving power of the MOS tube is only 14V; the source voltage of the upper arm MOS conduction is the power supply voltage (36V), so boost measures must be adopted to ensure the normal operation of the MOS tube; here we use a bootstrap boost circuit to ensure the normal operation of the circuit;
in the current sampling circuit 10, the three-phase current of the motor must be known to the vector control of the motor; the cost of using a current sensor is too high; the current sampling circuit 10 comprises a high-speed operational amplifier differential circuit and an operational amplifier circuit; The two-phase current of the motor is measured and the third-phase current is calculated by measuring the voltage drop of the MOS tube of the two-phase lower arm through the high-speed operational amplifier differential circuit; since the internal resistance of the MOS tube is small and the sampling signal is weak, the differential wiring is adopted, and the signal is amplified by the operational amplifier circuit of the same phase ratio and transmitted to the main control single-chip microcomputer 9; the DC bus current limit adopts two alloy resistors; the voltage drop on the alloy resistor is amplified through the operational amplifier circuit of the same phase, and then the amplified voltage signal is sent to the main control single-chip microcomputer 9; the main control single-chip microcomputer 9 controls the driving of the motor according to the sampled current signal to achieve the purpose of limiting the motor current and ensure the reliability of the control system;

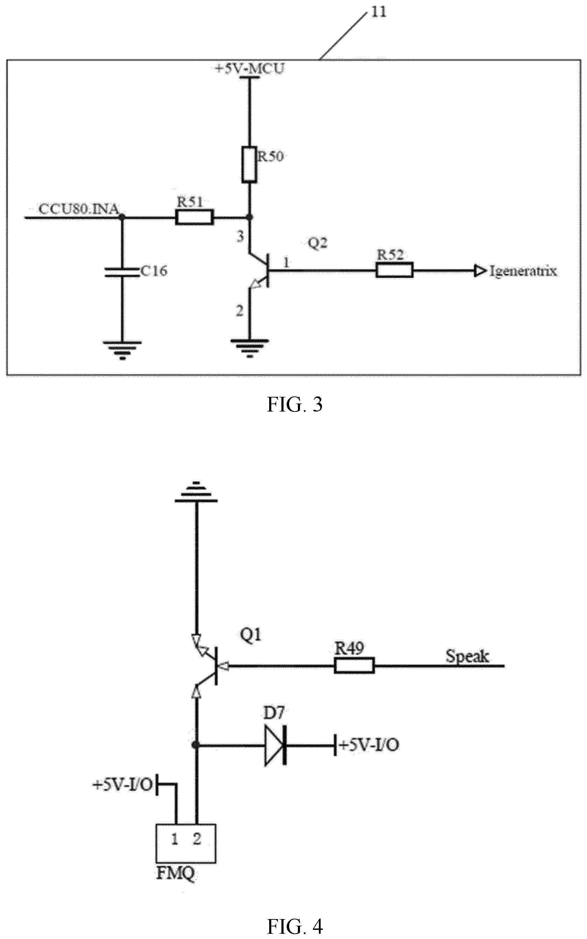

FIG. 3 shows the overcurrent circuit 11; when the current is too large, a large voltage drop will be generated across the current sampling resistor; when the generated voltage drop is greater than the conduction voltage of the BE pole of the NPN transistor, the transistor is turned on, and the interrupt input port of the main control single-chip microcomputer 9 is pulled low, the single-chip microcomputer is triggered to be interrupted, and the single-chip microcomputer detects the interrupt and turns off the MOS output to prevent the controller from being damaged;

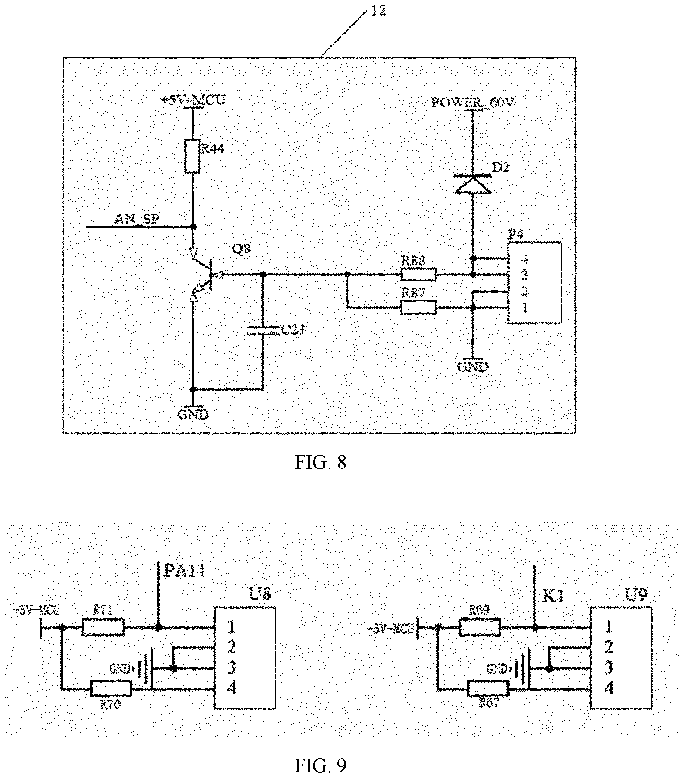

FIG. 8 shows the charging port detection circuit 12; when charging the balance car, through R88, R87 partial pressure detection, drive the triode to pull down the AN_SP signal, and then the single-chip microcomputer detects the low level signal and recognizes that the balance car is charging.

Further, the left motor control board 1 and the right motor control board 2 both adopt double-sided arrangement of electronic components, and adopt chip capacitors; the swing car controller of the invention adopts double-sided layout of electronic components, and reduces the plug-in capacitance; it is designed with chip capacitors as much as possible, which greatly reduces the volume of the control board and can make the entire vehicle volume smaller.

Further, the drive board hardware and software of the left motor control board 1 and the right motor control board 2 are the same; when one side of the motor drive fails, only one side of the control board needs to be replaced, which can completely avoid the replacement of the entire control board due to the problem of part of the motor control circuit on one side of the traditional single-system control board, and greatly reduce the probability of single board failure.

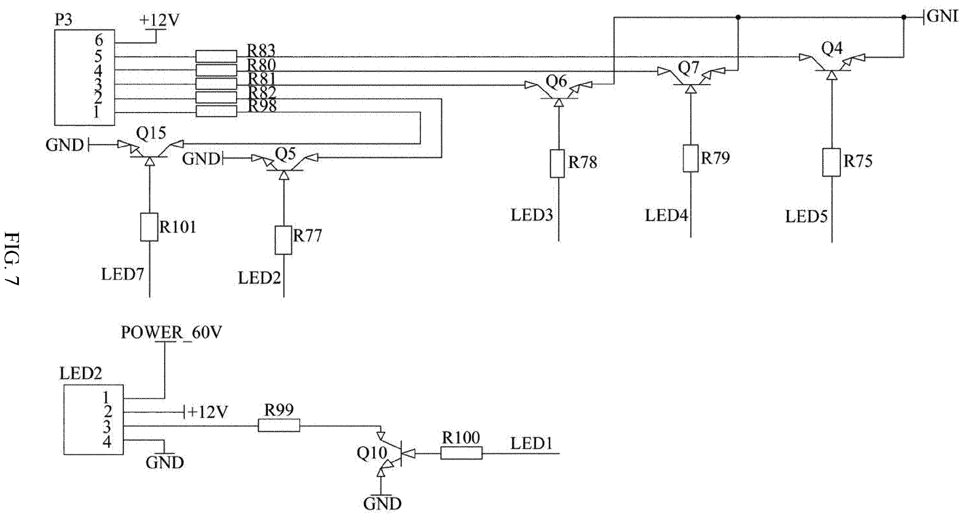

Further, the light board adapter board is connected to a light emitting diode through a light control circuit; the light emitting diode adopts a common anode connection method, and the on-off of the light emitting diode is controlled by a current-limiting resistor and an NPN triode; the light control circuit is mainly used to indicate battery power, photoelectric switch state, fault state and other state prompts, as shown in FIG. 7;
further, the charging protection board comprises a linear step-down power supply circuit and a charging loop switch tube; the main control single-chip microcomputer 9 sends instructions to control whether to charge through the detected charging current and charging voltage, so as to prevent the charger from overshooting the battery;
further, both the left pedal and the right pedal are provided with a photoelectric switch, and the photoelectric switch is used for pedal detection, as shown in FIG. 9.

Further, the left motor control board 1 is connected to a voice prompt circuit; the sounder of the voice prompt circuit adopts a buzzer, and is driven by the NPN triode and the current-limiting resistor; the circuit is simple and reliable, as shown in FIG. 4.

Further, the left motor control board 1, the left motor vector drive circuit 5, the right motor control board 2, and the right motor vector drive circuit 8 are all connected to a battery management circuit 13.

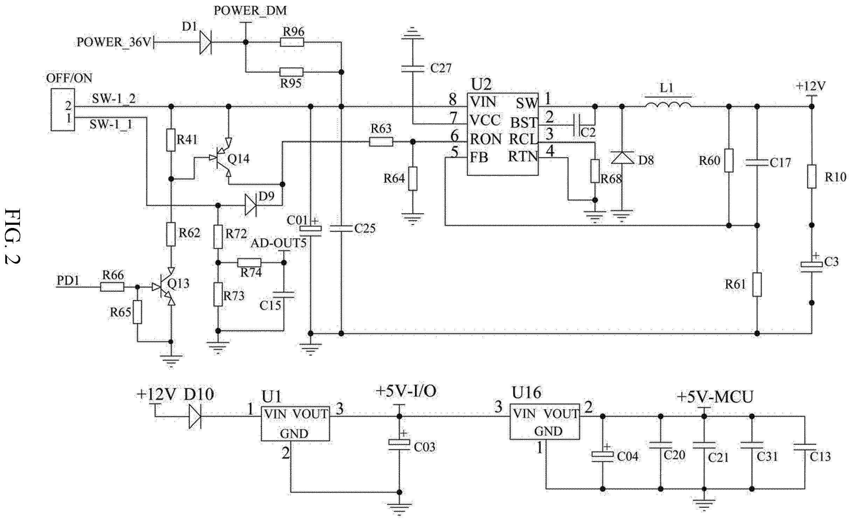

FIG. 2 shows the power-switching circuit; when the control motherboard is in the off state, press the motherboard power button and the triode Q10 is turned on, the control circuit works, the main control single-chip microcomputer 9 detects the button signal, and the PD1 port outputs a high level, then Q is locked to the on state; at this time, if the power button is released, the circuit can also supply power normally. When the controller is in the working state, press the power button, the power button detection port detects the voltage change at the port, the PD1 port outputs a low level; at this time, if the power button is released, then Q, Q10 are turned off, and the control motherboard power is turned off. The switching circuit provides normal working voltage for each module of the entire working circuit, which are the V voltage of the motor drive, the light strip, the 5V DC power supply of the motor Hall sensor, and the 3.3V DC power supply of the single-chip microcomputer; in order to improve the efficiency of the whole machine and reduce the heat generation of components, the V DC voltage adopts a BUCK-type step-down chopper circuit, the 5V directly adopts a 78M05 three-terminal power chip, and the 3.3V directly adopts a AMS1117 three-terminal power chip; the whole circuit is simple, low-cost, and reliable.

Further, the left car body attitude sensor 4 comprises a 3-axis gyroscope and a 3-axis acceleration sensor; both the 3-axis gyroscope and the 3-axis acceleration sensor are electrically connected to the main control single-chip microcomputer 9 through a MPU6050 chip.

As shown in FIG. 6, the invention adopts a piece of MPU6050 chip to directly communicate with the main control single-chip microcomputer 9 of the driving motor to detect the attitude of the pedals on the left and right sides of the vehicle; the MPU6050 chip integrates a 3-axis gyroscope and a 3-axis acceleration sensor, and communicates with the control circuit through the IIC interface; the control circuit processes the data of the attitude sensor to calculate the current attitude in real time, and then controls the rotation of the motor to make the car body move forward and backward and move left and right.

Although the invention has been described in detail hereinabove with general descriptions and specific embodiments, it is obvious to those skilled in the art that some modifications or improvements may be made on the basis of the invention. Therefore, these modifications or improvements made without departing from the spirit of the invention shall all fall within the protection scope of the invention.

## Claims

1. A swing car controller, comprising a left motor control board (1) and a right motor control board (2), wherein the left motor control board (1) is arranged close to the left motor (3), and the right motor control board (2) is arranged close to the right motor (6);
the left motor control board (1) connects the left motor (3) and a left car body attitude sensor (4); the left car body attitude sensor (4) collects the left pedal attitude information and sends the information to the left motor control board (1); the left motor control board (1) controls the left motor (3) for normal operation through a left motor vector drive circuit (5); the left car body attitude sensor (4) and the left motor vector drive circuit (5) are integrated on the left motor control board (1);
the right motor control board (2) connects the right motor (6) and a right car body attitude sensor (7); the right car body attitude sensor (7) collects the right pedal attitude information and sends the information to the right motor control board (2); the right motor control board (2) controls the right motor (6) for normal operation through a right motor vector drive circuit (8);
the left motor control board (1) and the right motor control board (2) both comprise a main control single-chip microcomputer (9), a current sampling circuit (10), an overcurrent protection circuit (11), and a charging port detection circuit (12); the left motor control board (1) and the right motor control board (2) communicate with each other through the main control single-chip microcomputer (9); the main control single-chip microcomputer (9) is used for motor vector drive and control voltage and current detection;
both the left motor control board (1) and the right motor control board (2) are connected with a light board adapter board and a charging protection board at external.

2. The swing car controller according to claim 1, wherein the left motor control board (1) and the right motor control board (2) both adopt double-sided arrangement of electronic components, and adopt chip capacitors.

3. The swing car controller according to claim 1, wherein the drive board hardware and software of the left motor control board (1) and the right motor control board (2) are the same.

4. The swing car controller according to claim 1, wherein the light board adapter board is connected to a light emitting diode through a light control circuit; the light emitting diode adopts a common anode connection method, and the on-off of the light emitting diode is controlled by a current-limiting resistor and an NPN triode.

5. The swing car controller according to claim 1, wherein the charging protection board comprises a linear step-down power supply circuit and a charging loop switch tube; the main control single-chip microcomputer (9) sends instructions to control whether to charge through the detected charging current and charging voltage, so as to prevent the charger from overshooting the battery.

6. The swing car controller according to claim 1, wherein both the left pedal and the right pedal are provided with a photoelectric switch, and the photoelectric switch is used for pedal detection.

7. The swing car controller according to claim 1, wherein the left motor control board (1) is connected to a voice prompt circuit; the sounder of the voice prompt circuit adopts a buzzer, and is driven by the NPN triode and the current-limiting resistor; the circuit is simple and reliable.

8. The swing car controller according to claim 1, wherein the left motor control board (1), the left motor vector drive circuit (5), the right motor control board (2), and the right motor vector drive circuit (8) are all connected to a battery management circuit (13).

9. The swing car controller according to claim 1, wherein the left car body attitude sensor (4) comprises a 3-axis gyroscope and a 3-axis acceleration sensor; both the 3-axis gyroscope and the 3-axis acceleration sensor are electrically connected to the main control single-chip microcomputer (9) through a MPU6050 chip.

10. The swing car controller according to claim 1, wherein the current sampling circuit (10) comprises a high-speed operational amplifier differential circuit and an operational amplifier circuit.
